(19) Europäisches Patentamt
European Patent Office
Office européen des brevets

(11) Numéro de publication: **0 239 509 B1**

(12) **FASCICULE DE BREVET EUROPEEN**

(45) Date de publication du fascicule du brevet: **21.03.90**

(21) Numéro de dépôt: **87420055.3**

(22) Date de dépôt: **24.02.87**

(51) Int. Cl.[4]: **C08L 83/07**
// (C08L83/07, 83:07, C08K5:14, 5:17, 3:28)

(54) **Compositions silicones vulcanisables à chaud à extrudabilité améliorée.**

(30) Priorité: **27.02.86 FR 8602962**

(43) Date de publication de la demande: **30.09.87 Bulletin 87/40**

(45) Mention de la délivrance du brevet: **21.03.90 Bulletin 90/12**

(84) Etats contractants désignés: **AT BE CH DE ES FR GB GR IT LI LU NL SE**

(56) Documents cités:
**EP-A- 0 055 957**
**EP-A- 0 149 382**
**FR-A- 1 237 927**
**US-A- 2 707 179**
**US-A- 3 024 214**

(73) Titulaire: **RHONE-POULENC CHIMIE, 25, quai Paul Doumer, F-92408 Courbevoie Cédex(FR)**

(72) Inventeur: **Shen, Ming, 1284 Medina Road, Lakewood New Jersey 08 701(US)**
Inventeur: **Lagarde, Robert, 5, rue des Lilas, F-69320 Feyzin(FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex(FR)**

EP 0 239 509 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet de nouvelles compositions organopolysiloxanes durcissant à chaud en élastomères. Ces compositions se moulent et s'extrudent facilement permettant d'une part des remplissages rapides et complets des cavités des moules et d'autre part l'obtention d'extrudats homogènes en surface et dans la masse. Outre ces avantages, elles conduisent à des élastomères silicones ayant un ensemble de propriétés remarquables et plus spécialement une bonne tenue à l'eau bouillante et des propriétés physiques et électriques élevées quelle que soit la quantité de charges minérales qu'elles renferment.

On a cherché, depuis le début de la fabrication des caoutchoucs de silicone vulcanisés à chaud, à améliorer leurs caractéristiques physiques, en particulier leur résistance à la chaleur et à la réversion.

Les techniques utilisées sont décrites dans un grand nombre de documents comprenant entre autres les brevets américains 2 803 619, 2 819 236, 3 024 126, 3 652 475, 3 660 345, 4 335 035, 4 444 940 et le brevet anglais 915 010.

Le brevet américain 2 803 619 se rapporte à des compositions renfermant une gomme diorganopolysiloxane exempte de radicaux vinyle et un polymère diorganopolysiloxane en contenant suffisamment pour fournir un radical vinyle pour 5 000 à 20 000 atomes de silicium présents dans le mélange de la gomme et du polymère. Ces compositions durcissent, à l'aide d'un péroxyde organique, en élastomères silicones ayant une faible déformation rémanente à la compression.

Le brevet américain 2 819 236 concerne des compositions comprenant une gomme silicone, une huile diorganopolysiloxane de viscosité inférieure à 1 million de mPa.s à 25 °C, ayant de 5 à 15 moles % de motifs organosiloxy portant chacun un radical vinyle, et un péroxyde organique.

Les élastomères issus des compositions ont une faible dureté et des propriétés mécaniques élevées.

Le brevet américain 3 024 126 décrit un procédé de traitement d'une silice renforçante par l'association d'un composé aminé et d'un composé organosilicique portant des radicaux hydroxy ou alcoxy. Les élastomères silicones, renfermant cette silice, ont des caractéristiques physiques améliorées.

Le brevet anglais 915 010 a pour objet un procédé concernant la préparation d'élastomères silicones par chauffage préalable de compositions renfermant un polymère diorganopolysiloxane, une silice renforçante, un composé organosilicique à radicaux hydroxy ou alcoxy et un composé aminé pouvant être choisi parmi l'ammoniac, une amine primaire, secondaire ou tertiaire. Les élastomères silicones ont une résistance à la rupture et à la déchirure élevée ainsi qu'une résistance thermique améliorée.

Le brevet américain 3 652 475 décrit des compositions renfermant une gomme diorganopolysiloxane exempte de radicaux vinyle, une gomme diorganopolysiloxane ayant de 5 à 20 moles % de motifs vinylorganosiloxy, un polymère diorganopolysiloxane de degré de polymérisation 10 à 1 000 ayant de 5 à 90 moles % de motifs vinylorganoxiloxy, une silice renforçante et un péroxyde organique. Les élastomères silicones obtenus ont une résistance à la déchirure améliorée.

Le brevet américain 3 660 345 concerne des compositions renfermant une gomme diorganopolysiloxane vinylée ayant 0,01 à 0,6 mole % de motifs vinylorganosiloxy, une polymère vinylméthylpolysiloxane dont la quantité introduite est suffisante pour fournir des motifs vinylméthylsiloxy représentant 1 à 3,5 % en poids du mélange de la gomme et du polymère, une silice renforçante, un composé organosilicique empêchant la structuration. Le polymère vinylméthylpolysiloxane peut avoir de 2 à 100 moles %, de préférence 5 à 20 moles % de motifs méthylvinylsiloxy. Les élastomères issus des compositions possèdent une résilience élevée ainsi qu'une résistance à la déchirure améliorée.

Le brevet américain 4 335 035 décrit des compositions comportant une gomme diorganopolysiloxane ayant 0,01 à 0,3 % de radicaux vinyle, un organohydrogénopolysiloxane ayant 0,2 à 2,5 % de radicaux vinyle, une silice renforçante et un péroxyde organique. Les élastomères en résultant possèdent de bonnes caractéristiques thermiques et une résistance à la déchirure élevée.

Le brevet américain 4 444 940 se rapporte à des compositions renfermant :

1. - un diorganopolysiloxane de viscosité d'au moins 10 000 mPa.s à 25 °C, ne portant pas de radicaux vinyle le long de la chaîne,

2. - un diorganopolysiloxane de degré de polymérisation 2 à 400 bloqué à chaque extrémité de sa chaîne par un motif diorganovinylsiloxy, ne portant pas également de radicaux vinyle le long de la chaîne, une charge renforçante ou non renforçante, un péroxyde organique ; la proportion du polymère 2. est ajustée de manière à fournir 0,2 à 2 motifs diorganovinylsiloxy par 100 motifs diorganosiloxy appartenant à 1.

Les documents précédents mettent l'accent sur l'amélioration des caractéristiques physiques ou thermiques des élastomères silicones. Ils n'enseignent pas les moyens à mettre en oeuvre pour fabriquer des élastomères présentant un ensemble de qualités recherchées actuellement par les utilisateurs.

Ces derniers demandent en particulier :
- une mise en oeuvre aisée et rapide sur les machines utilisées pour le moulage et l'extrusion,
- la fabrication d'extrudats ayant une surface lisse et homogène,
- des caractéristiques physiques et électriques élevées quelle que soit la dureté choisie des élastomères.

La présente invention a précisément pour but de proposer des compositions organopolysiloxanes durcissant à chaud en élastomères présentant les qualités ci-dessus recherchées actuellement par les utilisateurs.

Ce but et d'autres sont atteints par la présente invention qui concerne en effet des compositions organopolysiloxanes durcissant à l'aide d'un péroxyde et comportant des quantités efficaces d'une part d'huiles diorganopolysiloxanes ayant un taux approprié en motifs vinylorganosiloxy et d'autre part de composés aminés déterminés.

Dans ce qui suit, sauf mentions contraires, les pourcentages et parties sont en poids.

La présente invention a plus précisément pour objet des compositions organopolysiloxanes durcissant à chaud en élastomères, caractérisées en ce qu'elles comportent :

- 100 parties d'un mélange de polymères organopolysiloxanes, renfermant :

(i) - 70 à 98 % en poids d'une gomme diorganopolysiloxane de formule générale $R_{3-a}(R'O)_aSiO(R_2SiO)_nSi(OR')_aR_{3-a}$ dans laquelle les symboles R, identiques ou différents, représentent des radicaux hydrocarbonés en $C_1$-$C_8$, substitués ou non par des atomes d'halogène, des radicaux cyano ; le symbole R' représente un atome d'hydrogène, un radical alkyle en $C_1$-$C_4$, le symbole a représente zéro ou un, le symbole n représente un nombre ayant une valeur suffisante pour obtenir une viscosité d'au moins 1 million de mPa.s à 25 °C, au moins 50 % en nombre des radicaux représentés par R sont des radicaux méthyle et 0,005 à 0,5 mole % des motifs entrant dans la constitution de la gomme sont choisis parmi ceux de formules $(CH_2{=}CH)(R)SiO$ et
$(CH_2{=}CH)R_{2-a}(RO')_aSi_{0,5}$,

(2i) - 2 à 30 % en poids d'au moins une huile diorganopolysiloxane de formule $R_3SiO(R_2SiO)_kSiR_3$ dans laquelle les symboles R, identiques ou différents ont la signification donnée sous (i) ; le symbole k représente un nombre ayant une valeur suffisante pour obtenir une viscosité de 20 000 à 200 000 mPa.s à 25 °C, au moins 50 % en nombre des radicaux représentés par R sont des radicaux méthyle et 0,05 à 3 moles % des motifs entrant dans la constitution de l'huile sont choisis parmi ceux de formules $(CH_2{=}CH)RSiO$ et $(CH_2{=}CH)R_2SiO_{0,5}$,

- 0,01 à 10 parties d'au moins un composé aminé présentant un pKa supérieur à 7,5 en solution aqueuse à 25 °C et un point d'ébullition, à la pression atmosphérique, inférieur à 270 °C,
- 5 à 280 parties de charges minérales,
- 0,1 à 7 parties d'un péroxyde organique.

La gomme diorganopolysiloxane (i) de viscosité au moins 1 million de mPa.s à 25 °C, de préférence d'au moins 2 millions de mPa.s à 25 °C, est constituée, le long de sa chaîne, de motifs $R_2SiO$ et elle est bloquée à chaque extrémité de sa chaîne par un motif $R_{3-a}(R'O)_aSiO_{0,5}$ ; cependant la présence en mélange avec ces motifs, de motifs de structure différente, par exemple de formule $RSiO_{1,5}$ et $SiO_2$, n'est pas exclue dans la proportion d'au plus 2 % par rapport au nombre total des motifs $R_2SiO$ et $R_{3-a}(RO')_aSiO_{0,5}$.

Le symbole R représente un radical hydrocarboné en $C_1$-$C_8$ substitué ou non par des atomes d'halogène, des radicaux cyano ; il englobe plus spécifiquement :

- des radicaux alkyle en $C_1$-$C_5$, substitués ou non par des atomes d'halogène, des radicaux cyano, tels que que les radicaux méthyle, éthyle, propyle, isopropyle, butyle, isobutyle, pentyle, trifluoro-3,3,3 propyle, β-cyanoéthyle, γ-cyanopropyle,
- des radicaux alcényle en $C_2$-$C_4$ tels que les radicaux vinyle, allyle, butène-2 yle,
- des radicaux aryle mononucléaire en $C_6$-$C_8$, substitués ou non par des atomes d'halogène tels que les radicaux phényle, chlorophényle, tolyle, trifluorométhylphényle.

Les radicaux alkyle en $C_1$-$C_4$, représentés par le symbole R', concernent plus spécifiquement les radicaux méthyle, éthyle, propyle, isopropyle, butyle, butyle secondaire.

Au moins 60 % en nombre, de préférence au moinso 70 % des radicaux représentés par R sont des radicaux méthyle.

Par ailleurs des radicaux vinyle sont également présents, en quantité appropriée, dans la gomme (i) ; ils conduisent à des motifs de formule $CH_2{=}CH(R)SiO$ et $CH_2{=}CH(R_{2-a})(R'O)_aSiO_{0,5}$ dont le nombre représente 0,005 à 0,5 mole %, de préférence 0,01 à 0,45 mole %, de l'ensemble des motifs de formules générales $R_2SiO$ et $R_{3-a}(R(O)_aSi_{0,5}$, entrant dans la constitution de la gomme (i).

A titre d'exemples concrets de motifs constituant les gommes (i) peuvent être cités ceux de formules :

$(CH_3)_2SiO$,
$CH_3(CH_2{=}CH)SiO$,
$CH_3(C_6H_5)SiO$,
$(C_6H_5)_2SiO$,
$CH_3(C_2H_5)SiO$,
$CH_3CH_2$-$CH_2(CH_3)SiO$,
$CH_3(n.C_3H_7)SiO$,
$(CH_3)_3SiO_{0,5}$,
$(CH_3)_2CH_2{=}CHSiO_{0,5}$,
$CH_3(C_6H_5)_2SiO_{0,5}$,
$CH_3(C_6H_5)(CH_2{=}CH)SiO_{0,5}$,
$HO(CH_3)_2SiO_{0,5}$,

$CH_3O(CH_3)_2SiO_{0,5}$,
$C_2H_5O(CH_3)_2SiO_{0,5}$,
$n.C_3H_7O(CH_3)_2SiO_{0,5}$,
$HO.(CH_2{=}CH)(CH_3)SiO_{0,5}$,

Les gommes (i) sont commercialisées par les fabricants de silicones, d'autre part elles peuvent être aisément fabriquées en mettant en oeuvre des techniques abondamment décrites dans la littérature chimique.

Dans la majorité des cas, on utilise des gommes méthylvinyldiméthylpolysiloxanes possèdant le long de leur chaîne des motifs $(CH_3)_2SiO$ et $CH_2{=}CH(CH_3)SiO$ et à l'extrémité de leur chaîne des motifs choisis parmi ceux de formules :
$(CH_3)_2CH_2{=}CHSiO_{0,5}$, $HO(CH_3)(CH_2{=}CH)SiO_{0,5}$,
$(CH_3)_3SiO_{0,5}$, $C_6H_5(CH_3)CH_2{=}CHSiO_{0,5}$,
$HO(CH_3)_2SiO_{0,5}$.
ou des gommes diméthylpolysiloxanes bloquées à chaque extrémité de leur chaîne par l'un des motifs précédents renfermant un radical vinyle.

Elles présentent généralement une viscosité d'au moins 2 millions de mPa.s à 25 °C.

L'huile diorganopolysiloxane (2i) a une structure proche de celle de la gomme diorganopolysiloxane (i) ; c'est un polymère linéaire de viscosité 20 000 à 200 000 mPa.s à 25 °C, de préférence 30 000 à 170 000 mPa.s à 25 °C, constitué le long de sa chaîne de motifs $R_2SiO$ et bloqué à chaque extrémité de sa chaîne par un motif $R_3SiO_{0,5}$.

D'autres motifs, par exemple de formules $RSiO_{1,5}$ et $SiO_2$ peuvent être mélangés avec les motifs précédents, cependant ils représentent une faible quantité qui ne dépasse pas 2 % de l'ensemble des motifs de formules $R_2SiO$ et $R_3SiO_{0,5}$.

Le symbole R a la même signification que celle donnée précédemment lors de la description de la gomme (i). Il représente donc un radical hydrocarboné en $C_1$-$C_8$, substitué ou non par des atomes d'halogène, des radicaux cyano, englobant en particulier des radicaux méthyle et vinyle. Ces deux types de radicaux sont obligatoirement présents en quantité appropriée dans l'huile (2i). Plus précisément au moins 50 % en nombre, de préférence au moins 60 %, des radicaux représentés par R sont des radicaux méthyle. Quant aux radicaux vinyle, la quantité introduite est suffisante pour conduire à des motifs de formules $CH_2{=}CH(R)SiO$ et $CH_2{=}CHR_2SiO_{0,5}$ dont le nombre représente 0,05 à 3 moles %, de préférence 0,07 à 2,8 moles % de l'ensemble des motifs de formules générales $R_2SiO$ et $R_3SiO_{0,5}$ entrant dans la constitution de l'huile (2i).

A titre d'exemples concrets de motifs constituant les huiles (2i) peuvent être mentionnés les motifs répondant aux formules ci-après :
$(CH_3)_2SiO$,
$CH_3(CH_2{=}CH)SiO$,
$CH_3(n.C_3H_7)SiO$,
$CH_3(C_6H_5)SiO$,
$(C_6H_5)_2SiO$,
$CH_3(C_2H_5)SiO$,
$CF_3CH_2CH_2(CH_3)SiO$,
$(CH_3)_3SiO_{0,5}$,
$(CH_3)_2C_6H_5SiO_{0,5}$,
$(CH_3)_2CH_2{=}CHSiO_{0,5}$,
$CH_3(C_6H_5)(CH_2{=}CH)SiO_{0,5}$.

Les huiles (2i) sont commercialisées par les fabricants de silicones, elles peuvent être en outre fabriquées par des méthodes connues.

On utilise préférentiellement des huiles méthylvinyldiméthylpolysiloxanes possèdant le long de leur chaîne des motifs $(CH_3)_2SiO$ et $CH_2{=}CH(CH_3)SiO$ et à l'extrémité de leur chaîne des motifs choisis parmi ceux de formules :
$(CH_3)_3SiO_{0,5}$, $CH_2{=}CH(CH_3)_2SiO_{0,5}$,
$CH_3(C_6H_5)(CH_2{=}CH)SiO_{0,5}$
ou des huiles diméthylpolysiloxanes bloquées à chaque extrémité de leur chaîne par l'un des motifs précédents renfermant un radical vinyle, ces huiles ont une viscosité de 30 000 à 170 000 mPa.s à 25 °C.

Le mélange constitué de la gomme (i) et de l'huile (2i) renferme en poids 70 à 98 %, de préférence 75 à 95 %, de la gomme diorganopolysiloxane (i) et 30 à 2 %, de préférence 25 à 5 %, de l'huile (2i).

Des composés aminés sont utilisés à raison de 0,01 à 10 parties, de préférence 0,05 à 9 parties, pour 100 parties du mélange de la gomme (i) et de l'huile (2i).

Ces composés présentent d'une part un pKa supérieur à 7,5, de préférence supérieur à 8, en solution aqueuse à 25 °C, et d'autre part un point d'ébullition à la pression atmosphérique, inférieure à 270 °C, de préférence inférieure à 240 °C.

Parmi ces composés sont plus particulièrement recommandés l'ammoniac $NH_3$ et les amines primaires, secondaires et tertiaires e formule générale :

$R''_bN\ H_{3-b}$

dans laquelle les symboles R", identiques ou différents, représentent des radicaux alkyle en $C_1$-$C_{10}$ et le symbole b représente 1, 2 ou 3, l'ensemble des radicaux alkyle liés à l'atome d'azote ayant au plus 14 atomes de carbone, de préférence au plus 12 atomes de carbone.

Les radicaux alkyle en $C_1$-$C_{10}$ représentés par le symbole R" comprennent plus spécialement les radicaux méthyle, éthyle, propyle, isopropyle, butyle, isobutyle, butyle secondaire, pentyle, isopentyle, hexyle, éthyl-2 hexyle, heptyle, octyle, nonyle, décyle.

A titre d'exemples concrets d'amines répondant à la formule $R''_bN$ figurent les composés ci-après :

b = 1 :

méthylamine, éthylamine, n-propylamine, isopropylamine, n-butylamine, isobutylamine, n-pentylamine, n-hexylamine, n-heptylamine, n-octylamine, n-décylamine,

b = 2 :

diméthylamine, diéthylamine, di(n-propyl)amine, diisopropylamine, di(n.butyl)amine, diisobutylamine, di(n.pentyl)amine, di(n.hexyl)amine, di(n.heptyl)amine, méthyl(n.octyl)amine,

b = 3 :

triméthylamine, triéthylamine, tri(n.propyl)amine, diméthyléthylamine, tri(n.butyl)amine.

Les charges minérales sont introduites à raison de 5 à 280 parties, de préférence 7 à 250 parties, pour 100 parties du mélange de la gomme (i) et de l'huile (2i).

Elles comprennent habituellement des charges renforçantes finement divisées et des charges non renforçantes de tailles plus grossières.

Les charges renforçantes sont introduites dans la proportion de 5 à 100 parties, de préférence 7 à 90 parties pour 100 parties du mélange de la gomme (i) et de l'huile (2i).

Elles sont choisies de préférence parmi les silices de combustion et de précipitation. Ces silices ont une surface spécifique mesurée selon les méthodes BET et CTAB, d'au moins 50 $m^2/g$, de préférence supérieure à 70 $m^2/g$, une dimension moyenne des particules primaires inférieure à 80 nanomètres et une densité apparente inférieure à 200 g/litre.

Ces silices peuvent être incorporées telles quelles, ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les charges non renforçantes sont constituées de charges minérales dont le diamètre particulaire moyen est supérieur à 0,1 micromètre.

Ces charges sont représentées plus spécialement par le quartz broyé, les argiles calcinées, les silices de diatomées, le carbonate de calcium, les oxydes de fer, de titane, de magnésium, d'aluminium. Elles sont introduites à raison d'au plus 180 parties, de préférence d'au plus 160 parties, pour 100 parties des mélanges de la gomme (i) et de l'huile (2i). Ces charges minérales peuvent être utilisées telles quelles, c'est-à-dire non traitées ou traitées avec les composés organosiliciques mentionnés ci-avant dans le cas des silices renforçantes.

Les peroxydes organiques sont utilisés à raison de 0,1 à 7 parties, de préférence 0,2 à 6 parties, pour 100 parties du mélange de la gomme (i) et de l'huile (2i). Ils sont bien connus des techniciens de la fabrication des caoutchoucs et comprennent plus spécialement le peroxyde de benzoyle, le peroxyde de dichloro-2,4-benzoyle, le peroxyde de dicumyle, le bis(t-butylperoxy)-2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane.

Ces divers peroxydes se décomposent à des températures et à des vitesses parfois différentes. Ils sont choisis en fonction des conditions de durcissement exigées.

En dehors des constituants principaux, précédemment cités, d'autres constituants peuvent être indroduits dans les compositions conformes à l'invention. Ils comportent en particulier :

(e) - des huiles diorganopolysiloxaniques de formule :

$(R'O)R'''_2SiO(R'''_2SiO)_rSiR'''_2(OR')$

dans laquelle les symboles R‴, identiques ou différents, représentent des radicaux méthyle, phényle, vinyle ; le symbole R' [qui a la signification du symbole R' appartenant à la formule de la gomme (i)] représente un atome d'hydrogène, un radical alyle en $C_1$-$C_4$ ; le symbole r représente un nombre ayant une valeur appropriée pour obtenir une viscosité d'au plus 5 000 mPa.s à 25 °C ; en outre au moins 40 %, de préférence au moins 45 %, des radicaux représentés par R‴ sont des radicaux méthyle.

Ces huiles peuvent être introduites dans la proportion de 0,1 à 15 parties, de préférence 0,3 à 12 parties, pour 100 parties du mélange de la gomme (i) et de l'huile vinylée (2i). Leur viscosité est de préférence inférieure à 4 000 mPa.s à 25 °C.

Comme exemples concrets de motifs de formules $R'''_2SiO$ et $R'''_2(R(O)SiO_{0,5}$ constituant cette huile, peuvent être indiqués les motifs ci-après :

$(CH_3)_2SiO$,
$CH_3(CH_2{=}CH)SiO$,
$CH_3(C_6H_5)SiO$,
$(C_6H_5)_2SiO$,
$C_6H_5(CH_2{=}CH)SiO$,
$HO(CH_3)_2SiO_{0,5}$,
$CH_3O(CH_3)_2SiO_{0,5}$,
$HO(CH_3)(CH_2{=}CH)SiO_{0,5}$,
$C_2H_5O(CH_3)_2SiO_{0,5}$.

De préférence sont utilisées :

- des huiles diméthylpolysiloxanes de formule :

$R^1O(CH_3)_2SiO[(CH_3)_2SiO)]_{r^1}\ Si(CH_3)_2OR^1$

$R^1$ représentant un atome d'hydrogène, un radical méthyle, un radical β-méthoxyéthyle, un radical éthyle et $r^1$ un nombre approprié pour obtenir une viscosité de 10 à 200 mPa.s à 25 °C,

- des huiles méthylphénylpolysiloxanes de formule :

$R^2O(CH_3)(C_6H_5)SiO[(C_6H_5)(CH_3)SiO]_{r^2}\ Si(C_6H_5)(CH_3)OR^2$

$R^2$ représentant un atome d'hydrogène, un radical méthyle, $r^2$ un nombre approprié pour obtenir une viscosité de 40 à 2 000 mPa.s à 25°C.

L'utilisation des huiles a pour objet d'empêcher les compositions de l'invention de subir une évolution au cours du stockage, et plus précisément de se structurer, de durcir ; ce sont donc des agents "antistructures". Leur utilisation est surtout recommandée lorsque les quantités de charges renforçantes sont élevées, par exemple au-dessus de 20-40 parties pour 100 parties du mélange de la gomme (i) et de l'huile (2i).

(2e) - des composés organosiliciques répondant à la formule générale :

$(F_1)\ CH_2{=}C(R^3)COO(CH_2)_wSi(R''')_u(OR^4)_{3-u}$

dans laquelle, le symble R‴ [qui a la signification du symbole R‴ appartenant à la formule de l'huile (e) décrite ci-avant] représente un radical méthyle, vinyle, phényle ; le symbole $R^3$ représente un atome d'hydrogène, le radical méthyle ; le symbole $R^4$ représente un radical méthyle, éthyle, n-propyle, β-méthoxyéthyle ou de formules :

$-CH(CH_3)CH_2OCH_3$ , $-CH_2-CH(CH_3)OCH_3$ ; le symbole w représente un nombre de 1 à 5 et le symbole u représente un nombre de 0 à 2.

Ils comprennent donc les méthacroyloxyalcoylalcoxysilanes et les acroyloxyalcoylalcoxysilanes qui figurent par exemple dans le brevet américain 3 567 497.

A titre d'exemples concrets de ces silanes peuvent être cités ceux de formules :

$CH_2{=}CH-COOCH_2Si(OCH_3)_3$
$CH_2{=}CH-COOCH_2Si(OCH_2CH_2OCH_3)_2C_6H_5$
$CH_2{=}CH-COO(CH_2)_3Si(OC_2H_5)_3$
$CH_2{=}C(CH_3)COO(CH_2)_3Si(OCH_3)_3$
$CH_2{=}C(CH_3)COO(CH_2)_3SiCH_3(OCH_3)_2$
$CH_2{=}C(CH_3)COO(CH_2)_5Si(OCH_3)_3$
$CH_2{=}C(CH_3)COO(CH_2)_3Si(OCH_3)_2[OCH(CH_3)CH_2OCH_3]$

Ils peuvent être introduits dans les compositions de l'invention dans la proportion de 0,01 à 4 parties, de préférence de 0,02 à 3 parties, pour 100 parties du mélange de gomme (i) et de l'huile (2i).

A la place des silanes peuvent être utilisés, dans les mêmes proportions, leurs produits d'hydrolyse partielle qui répondent à la formule générale moyenne :

$$CH_2{=}C(R^3)COO(CH_2)_wSi(OR^4)_{t'}O_{\frac{3-(t+u)}{2}}(R'')_u$$

dans laquelle les symboles R‴, $R^3$, $R^4$, w et u ont la signification donnée précédemment et le symbole t représente un nombre quelconque de 0,5 à 2,2, la somme t + u s'étendant de 0,8 à 2,5.

Il est recommandé d'effectuer l'hydrolyse des silanes à des températures comprises dans l'intervalle 30 à 100 °C, en présence d'un catalyseur acide tel que l'acide chlorhydrique, l'acide phosphorique, l'acide acétique, avec une quantité molaire d'eau inférieure à la quantité nécessaire pour hydrolyser toutes les liaisons $SiOR^4$ (une mole d'eau permet théoriquement de transformer deux liaisons $SiOR^4$ en une liaison siloxane Si-O-Si). L'hydrolyse peut avoir lieu au sein ou non d'un solvant hydrocarboné ou halogénohydrocarboné.

En dehors des silanes et de leurs produits d'hydrolyse partielle peuvent être également utilisés, (dans les mêmes proportions que les silanes) les produits de réaction des silanes de formule ($F^1$) avec les huiles diorganopolysiloxanes précédentes (e). Les silanes sont limités à ceux de formule ($F^2$).

$CH_2{=}C(R^3)COO(CH_2)_wSi(OR^4)_3$, laquelle formule découle de ($F_1$) pour u = zéro, et les huiles (e) sont limitées à celles bloquées à chaque extrémité de leur chaîne par un radical hydroxyle, de viscosité 70 à 500 mPa.s à 25 °C et renfermant au moins 60 % de radicaux méthyles et au plus 3 % de radicaux vinyles.

Les huiles (e) et les silanes ($F^2$) sont mélangés en des proportions telles que le rapport molaire $SiOH/SiOR^4$ est de 0,1 à 0,95. La réaction est catalysée à l'aide d'un composé choisi parmi les titanates et polytitanates d'alcoyle et les sels de diorganoétain d'acides carboxyliques aliphatiques ; le catalyseur est utilisé à la dose de 0,05 à 2 parties, pour 100 parties du mélange des huiles (e) et des silanes ($F^2$). L'alcool de formule $R^4OH$ formé au cours de la réaction, peut être éliminé ou non des mélanges réactionnels. Si on l'élimine, il ne faut pas dépasser 45 % de la quantité pondérale théorique basée sur le nombre des radicaux SiOH et $SiOR^4$ présents dans les mélanges. Un tel procédé est décrit dans le brevet français 2 447 386 ; il conduit à des polymères organopolysiloxaniques stables, de viscosité 60 mPa.s à 20 000 mPa.s à 25 °C.

(3e) des dérivés organiques ou inorganiques d'un métal alcalino-terreux choisi parmi le calcium, baryum, strontium, magnésium. Ces dérivés peuvent être introduits dans la proportion de 0,01 à 10 parties, de préférence de 0,02 à 8 parties pour 100 parties du mélange de la gomme (i) et de l'huile (2i). Ils améliorent l'aspect de surface des élastomères surtout à l'état non recuit et la résistance aux huiles.

Comme exemples concrets de ces dérivés peuvent être mentionnés le silicate et polysilicate de calcium, les oxydes et hydroxydes de magnésium, de calcium, de baryum, les sels d'acides carboxyliques en $C_1$-$C_{20}$ de calcium tels que l'octoate de calcium, l'éthyl-2 hexanoate de calcium, le stéarate de calcium, le linoléate de calcium, le naphténate de calcium.

D'autres adjuvants sont encore envisageables, par exemple :

- des pigments minéraux et organiques tels que l'oxyde de titane du type rutile, le bleu de cobalt, les divers oxydes de fer, les titanates de nickel-chorme, la poudre d'aluminium, les phtalocyanines de cuivre.
- des stabilisants thermiques tels que les sels d'acides carboxyliques en $C_1$-$C_{10}$ de fer, de cerium, de manganèse (octoate, éthyl-hexanoate, naphtnénate), les oxydes et hydroxydes de terres rares (lanthane, cerium, praseodyme, néodyme .....), les minérais en renfermant tels que la monazite.
- des agents retardant la combustion principalement à base de dérivés du platine. Ces dérivés sont choisis généralement parmi l'acide chloroplatinique $H_2PtCl_6.6H_2O$, le chlorure platinique $Cl_4Pt$ et le chlorure platineux $Cl_2Pt$, et leurs complexes ou leurs produits de réaction avec des composés organiques ou organosiliciques. Ils sont, de préférence, associés avec des oxydes et hydroxydes de cérium ou avec des oxydes de titane, de fer ou d'aluminium obtenus par combustion. De telles associations figurent, entre autres, dans les brevets français 2 051 792, 2 166 313, 2 203 846.

La préparation des compositions conformes à l'invention s'effectue à l'aide de moyens mécaniques connus, par exemple de pétrins, de mélangeurs à cylindres, de mélangeurs à vis. Les divers constituants sont incorporés dans ces appareils dans un ordre pouvant être quelconque. Il est toutefois recommandé de charger tout d'abord les gommes (i), les huiles vinylées (2i), les charges minérales, les composés aminés et en dernier lieu les peroxydes organiques.

Les compositions obtenues sont stables au stockage ; par ailleurs, elles se moulent et s'extrudent aisément, ce qui permet un excellent remplissage des moules multi-empreintes ainsi que l'obtention d'extrudats exempts de défauts de surface.

Elles sont durcissables en élastomères par chauffage sous pression ou à l'air ambiant à des températures de l'ordre de 100 à 350 °C. La durée de chauffage varie évidemment avec la température, la pression et la nature des peroxydes ; elle est généralement de plusieurs minutes vers 100-200 °C et de quelques secondes vers 250-350 °C.

Les élastomères ainsi formés peuvent être chauffés ultérieurement, surtout ceux obtenus par moulage, dans l'intervalle 200-280 °C, pendant une période d'au moins une heure, dans le dessein d'achever leur réticulation et d'éliminer les matières volatiles qu'ils renferment.

Néanmoins, ces élastomères possèdent dès la fin de leur première phase de réticulation, c'est-à-dire avant la phase éventuelle de post-chauffage, de bonnes caractéristiques physiques et plus précisément une bonne résistance à la rupture et à la déchirure quelle que soit la quantité de charges minérales qu'ils renferment, ainsi cette quantité peut être représentée par 20 à 40 parties de silices renforçantes pour 100 parties du mélange de la gomme (i) et de l'huile vinylée (2i) ou bien par la même quantité de silices renforçantes auxquelles on ajoute 100 à 180 parties de charges non renforçantes telles qu'une silice de diatomées, du quartz broyé.

Ils présentent d'autre part une bonne tenue à l'eau bouillante. Pour mesurer cette propriété, on plonge des échantillons d'élastomères dans de l'eau bouillante pendant une période de plusieurs dizaines d'heures ; on examine ensuite les caractéristiques physiques, celles-ci sont peu affectées par le traitement, en particulier les variations de volume et de poids, sont faibles, généralement inférieures à 1 %.

Ces élastomères présentent en outre des propriétés électriques excellentes principalement au niveau de la résistivité transversale et de la rigidité diélectrique ; il en résulte qu'ils sont particulièrement recommandés pour l'isolation électrique.

Ils présentent encore lorsqu'ils sont fabriqués par extrusion, un remarquable aspect de surface et une structure interne homogène. Leur surface est lisse, dépourvue de boursouflures et de minicratères et leur structure interne est homogène et exempte de micro-bulles. Ces défauts se produisent habituellement, avec l'emploi de silices de précipitation comme charges renforçantes à la place de silices de combustion.

Les compositions conformes à l'invention sont utilisables pour la fabrication par moulage, calandrage, extrusion, de nombreuses pièces en élastomères silicones ou d'objets recouverts par ces élastomères.

Ces pièces peuvent être des joints, des profilés, des tubes, des objets de protection de formes diverses, destinés par exemple aux domaines de la mécanique (bagues d'étanchéité), de l'automobile (bonnettes de phares, capuchons de bougies), du bâtiment (joints d'huisserie), de l'électroménager (joints des portes de fours, de frigidaires).

Les objets recouverts d'élastomères concerne plus spécialement les câbles électriques entourés d'une gaine en élastomère, les associations composites constituées de tissus de verre (ou d'autres matériaux plats) et de feuilles d'élastomère.

Les pièces peuvent être utilisées également dans le domaine médical, pharmaceutique, alimentaire, grâce à la parfaite innocuité des élastomères silicones ; elles sont, dans ces applications, de préférence translucides ou même transparentes. Elles peuvent, par exemple avoir la forme de tubes (pour les appareils de transfusion sanguine, de dialyse), de tétines, de bouchons, de plaques d'isolation thermique.

- <u>EXEMPLE 1</u> :

On mélange intimement à l'aide d'un malaxeur les constituants ci-après :

- 85 parties d'une gomme diméthylpolysiloxane $G^1$ bloquée à chaque extrémité de sa chaîne par un motif diméthylvinylsiloxy, contenant 0,012 % de radicaux vinyle soit environ 0,027 mole % de motifs diméthylvinylsiloxy,
- 15 parties d'une huile méthylvinyldiméthylpolysiloxane $H^1$ bloquée à chaque extrémité de sa chaîne par un motif diméthylvinylsiloxy, de viscosité 76 000 mPa.s à 25 °C, contenant 0,072 % de radicaux vinyle provenant des motifs méthylvinylsiloxy et 0,072 % de radicaux vinyle provenant des motifs diméthylvinylsiloxy (soit environ 0,16 mole % de motifs méthylvinylsiloxy et 0,16 mole % de motifs diméthylvinylsiloxy par rapport à l'ensemble des motifs constituant l'huile $H^1$),
- 2,5 parties d'une huile diméthylpolysiloxane bloquée à chaque extrémité de sa chaîne par un radical hydroxyle lié à l'atome de silicium terminal, de viscosité 50 mPa.s à 25 °C, contenant environ 8 % de radicaux hydroxyle,
- 1,5 partie d'une huile méthylphénylpolysiloxane bloquée à chaque extrémité de sa chaîne par un radical méthoxy lié à l'atome de silicium terminal, de viscosité 250 mPa.s à 25 °C, contenant environ 6 % de radicaux méthoxy,
- 0,1 partie du silane de formule $CH_2=C(CH_3)COO(CH_2)_3Si(OCH_3)_3$
- 5 parties de silice de combustion de surface spécifique 200 $m^2/g$,
- 25 parties de silice de précipitation de surface spécifique 160 $m^2/g$,
- 1 partie de diéthylamine,
- 0,5 partie de $Ca(OH)_2$.

L'ensemble est malaxé 1 heure à une température de 120 °C, il en résulte l'obtention d'une première composition homogène $C^1$.

On fabrique une deuxième composition $C^2$, en utilisant le mode opératoire précédent ; toutefois on apporte à ce procédé la modification suivante :

- les 15 parties de l'huile vinylée $H^1$ sont remplacées par 15 parties d'une huile méthylvinyldiméthylpolysiloxane bloquée à chaque extrémité de sa chaîne par un motif triméthylsiloxy, de viscosité 81 000 mPa.s à 25 °C, contenant 0,16 mole % de motifs méthylvinylsiloxy.

On fabrique ensuite à titre comparatif des compositions $*C^3$, $*C^4$ et $*C^5$ en reproduisant également le mode opératoire mis en oeuvre pour la préparation de la composition $C^1$ cependant on apporte à ce procédé les modifications suivantes :

- <u>Composition $*C^3$</u>, les 15 parties de l'huile vinylée $H^1$ sont remplacées par 15 parties d'une huile méthylvinyldiméthylpolysiloxane bloquée à chaque extrémité de sa chaîne par un motif diméthylvinylsiloxy, de viscosité 15 000 mPa.s à 25 °C, contenant 0,5 mole % de motif méthylvinylsiloxy et 0,32 mole % de motif diméthylvinylsiloxy.
- <u>Composition $*C^4$</u>, les 15 parties de l'huile vinylée $H^1$ sont remplacées par 15 parties d'une huile méthylvinyldiméthylpolysiloxane, bloquée à chaque extrémité de sa chaîne par un motif triméthylsiloxy, de viscosité 12 000 mPa.s à 25 °C, contenant 0,5 mole de motifs méthylvinylsiloxy.
- <u>Composition $*C^5$</u>, les 85 parties de la gomme $G^1$ sont réduites à 70 parties, les 15 parties de l'huile $H^1$ sont remplacées par 30 parties d'une gomme méthylvinyldiméthylpolysiloxane, bloquée à chaque extrémité de sa chaîne par un motif triméthylsiloxy, contenant 0,072 % de radicaux vinyle soit environ 0,20 mole % de motif méthylvinylsiloxy.

On catalyse les compositions à l'aide du diméthyl-2,5 di(tertiobutylperoxy)-2,5 hexane ; la quantité utilisée du peroxyde représente 0,5 % du poids de chaque composition.

Les compositions sont durcies en élastomères par moulage sous compression pendant 10 minutes à 170 °C. On sépare les élastomères en deux lots et recuit l'un des deux lots par chauffage pendant 4 heures à 200 °C.

On mesure ensuite les propriétés mécaniques des élastomères ayant ou non subi la recuisson.

Les résultats sont rassemblés dans le tableau ci-après :

| PROPRIETES \ ELASTOMERES | $C^1$ | $C^2$ | $*C^3$ | $*C^4$ | $*C^5$ |
|---|---|---|---|---|---|
| NON RECUIT | | | | | |
| Dureté Shore A | 36 | 31 | 43 | 35 | 39 |
| Résistance à la rupture en MPa | 9 | 9,5 | 7,1 | 8 | 7,5 |
| Allongement à la rupture en % | 770 | 920 | 530 | 710 | 540 |
| Résistance à la déchirure en KN/m | 23 | 27 | 14 | 20 | 12 |
| RECUIT 4 HEURES A 200 °C | | | | | |
| Dureté Shore A | 35 | 31 | 42 | 36 | 40 |
| Résistance à la rupture en MPa | 9,6 | 9,2 | 7,1 | 8,1 | 7,5 |
| Allongement à la rupture en % | 810 | 910 | 590 | 750 | 540 |
| Résistance à la déchirure en KN/m | 22 | 25 | 13 | 19 | 14 |

On constate que les élastomères issus des compositions $C^1$ et $C^2$ présentent des propriétés dynamométriques (résistance à la rupture, allongement à la rupture) plus élevées que celles des élastomères issus des compositions comparatives $*C^3$, $*C^4$ et $*C^5$ ; par ailleurs leur résistance à la déchirure est également élevée, elle est nettement supérieure, en particulier, à celle présentée par l'élastomère issu de la composition $*C^5$ laquelle ne renferme pas d'huile vinylée $H^1$.

- EXEMPLE 2 :

On fabrique deux compositions $C^6$ et $C^7$ en suivant le mode opératoire mis en oeuvre pour fabriquer la composition $C^1$ de l'exemple 1.
Les constituants sont les mêmes que ceux décrits à l'exemple 1 toutefois on apporte les modifications suivantes :
- Composition $C^6$, on utilise 90 parties de la gomme diméthylpolysiloxane $G^1$ au lieu de 85 parties, et on utilise 10 parties de l'huile méthylvinyldiméthylpolysiloxane $H^1$ au lieu de 15 parties.
- Composition $C^7$, on utilise 93 parties de la gomme diméthylpolysiloxane $G^1$ au lieu de 85 parties et on utilise 7 parties de l'huile méthylvinyldiméthylpolysiloxane $H^1$ au lieu de 15 parties.

On ajoute à 100 parties de chaque composition $C^1$, $C^6$ et $C^7$, 100 parties de quartz broyé de surface spécifique de l'ordre de 2 $m^2/g$. D'autre part, à titre comparatif, on ajoute également 100 parties de quartz broyé.

(1) - à 100 parties de la composition $*C^5$ décrite à l'exemple 1 (l'association comprenant 85 parties de la gomme $G^1$ et 15 parties de l'huile vinylée $H^1$ de la composition $C^1$ a été remplacée par l'association comprenant 70 parties de la gomme $G^1$ et 30 parties d'une gomme vinylée contenant 0,20 mole % de motifs méthylvinylsiloxy).

(2) - à 100 parties d'une composition $*C^8$ identique à la composition $C^1$, sauf qu'elle ne renferme pas de diéthylamine (suppression de une partie de cette amine).

On obtient ainsi des compositions $C^1$, $C^6$, $C^7$, $*C^5$ et $*C^8$ chargées que l'on catalyse par addition du diméthyl-2,5 di(tertiobutylperoxy)-2,5 hexane.

La quantité utilisée du peroxyde représente 0,25 % du poids de chaque composition chargée.

Les compositions chargées sont durcies en élastomères par moulage sous compression pendant 10 minutes à 170 °C.

On sépare les élastomères en deux lots et recuit l'un des deux lots par chauffage pendant 4 heures à 200 °C.

On mesure ensuite les propriétés mécaniques des élastomères ayant ou non subi la recuisson.

Les résultats sont rassemblés dans le tableau ci-après :

| PROPRIETES / ELASTOMERES | Composition $C^1$ chargée | Composition $C^6$ chargée | Composition $C^7$ chargée | Composition $*C^5$ chargée | Composition $*C^8$ chargée |
|---|---|---|---|---|---|
| NON RECUIT | | | | | |
| Dureté Shore A | 69 | 68 | 70 | 67 | 68 |
| Résistance à la rupture en MPa | 8,3 | 7,5 | 7,4 | 5,7 | 4,5 |
| Allongement à la rupture en % | 240 | 220 | 220 | 190 | 240 |
| RECUIT 4 HEURES A 200 °C | | | | | |
| Dureté Shore A | 71 | 71 | 72 | 69 | 68 |
| Résistance à la rupture en MPa | 8,2 | 7,9 | 7,8 | 6,8 | 6,1 |
| Allongement à la rupture en % | 190 | 190 | 180 | 190 | 240 |

On constate, principalement à l'état de non recuit, que les élastomères issus des compositions $C^1$, $C^6$ et $C^7$ chargées, possèdent une résistance à la rupture nettement plus élevée que celle des élastomères issus des compositions $*C^5$ et $*C^8$ chargées.

- EXEMPLE 3 :

1. - On catalyse les compositions $C^1$ et $*C^5$, décrites à l'exemple 1, (la composition $*C^5$ est dépourvue d'huile vinylée $H^1$) à l'aide d'une pâte constituée d'une dispersion du peroxyde de dichloro-2,4 benzoyle à 50 % en poids dans une huile silicone ; la quantité utilisée de la pâte représente 1 % du poids de chaque composition.

Les compositions sont extrudées sous forme de profilés de section circulaire de diamètre 2 mm et ces profilés sont vulcanisés par passage pendant 15 secondes dans un four chauffé à 300 °C.

On constate que le vulcanisat issu de la composition $C^1$ présente d'une part une surface lisse, et d'autre part une structure homogène exempte de micro-bulles ; à l'opposé le vulcanisat issu de la composition $*C^5$ montre une surface boursouflée, faisant "la peau d'orange" et sa masse renferme de nombreuses micro-bulles.

2.- On catalyse la composition $*C^8$, décrite à l'exemple 2, (c'est une composition identique à la composition $C^1$ mais ne possèdant pas de diéthylamine), à l'aide du peroxyde de dichloro-2,4-benzoyle selon le processus indiqué sous (1).

On durcit ensuite les compositions $C^1$ et $*C^8$ (toutes deux catalysées au peroxyde de dichloro-2,4 benzoyle) en élastomères par moulage sous compression pendant 8 minutes à 115 °C. On sépare les élastomères en deux lots.

Sur un des lots on mesure la résistivité transversale. On trouve :
- élastomère issu de $C^1$ : $1,45 \times 10^{15}$ Ω.cm
- élastomère issu de $*C^8$ : $1,55 \times 10^{14}$ Ω.cm

On remarque, ainsi, que l'élastomère issue de $C^1$ a une meilleure résistivité transversale que l'élastomère issu de $*C^8$.

Sur l'autre lot on mesure tout d'abord les caractéristiques physiques des élastomères ; puis on immerge des échantillons de ces élastomères dans de l'eau bouillante pendant 70 heures à la pression atmosphérique. On mesure après ce traitement également leurs caractéristiques physiques.

Les variations des valeurs de ces caractéristiques sont rassemblées dans le tableau ci-après :

| ELASTOMERES / VARIATIONS EN % | ELASTOMERE issu de $C^1$ | ELASTOMERE issu de $*C^8$ |
|---|---|---|
| du volume | 0,6 | 3 |
| du poids | 0,9 | 3,4 |
| de la résistance à la rupture | 4 | - 4 |
| de l'allongement à la rupture | - 4 | - 15 |

On constate que l'élastomère issu de la composition $C^1$ montre une meilleure tenue à l'eau bouillante que celui issu de la composition $*C^8$.

## Revendications

1. Compositions organopolysiloxanes durcissant à chaud en élastomères, caractérisées en ce qu'elles comportent :
- 100 parties d'un mélange de polymères organopolysiloxanes, renfermant :

(i) - 70 à 98 % en poids d'une gomme diorganopolysiloxane de formule générale $R_{3-a}(R'O)_aSiO(R_2SiO)_nSi(OR')_aR_{3-a}$ dans laquelle les symboles R, identiques ou différents, représentent des radicaux hydrocarbonés en $C_1$-$C_8$, substitués ou non par des atomes d'halogène, des radicaux cyano ; le symbole R' représente un atome d'hydrogène, un radical alkyle en $C_1$-$C_4$, le symbole a représente zéro ou un, le symbole n représente un nombre ayant une valeur suffisante pour obtenir une viscosité d'au moins 1 million de mPa.s à 25 °C, au moins 50 % en nombre des radicaux représentés par R sont des radicaux méthyle et 0,005 à 0,5 mole % des motifs entrant dans la constitution de la gomme sont choisis parmi ceux de formules $(CH_2=CH)(R)SiO$ et $(CH_2=CH)R_{2-a}(RO')_aSi_{0,5}$,

(2i) - 2 à 30 % en poids d'au moins une huile diorganopolysiloxane de formule $R_3SiO(R_2SiO)_kSiR_3$ dans laquelle les symboles R, identiques ou différents ont la signification donnée sous (i) ; le symbole k représente un nombre ayant une valeur suffisante pour obtenir une viscosité de 20 000 à 200 000 mPa.s à 25 °C, au moins 50 % en nombre des radicaux représentés par R sont des radicaux méthyle et 0,05 à 3 moles % des motifs entrant dans la constitution de l'huile sont choisis parmi ceux de formules $(CH_2=CH)RSiO$ et $(CH_2=CH)R_2SiO_{0,5}$,

- 0,01 à 10 parties d'au moins un composé aminé présentant un pKa supérieur à 7,5 en solution aqueuse à 25 °C et un point d'ébullition, à la pression atmosphérique, inférieur à 270 °C,
- 5 à 280 parties de charges minérales,
- 0,1 à 7 parties d'un péroxyde organique.

2. - Compositions selon la revendication 1, caractérisées en ce que les gommes (i) possèdent le long de leur chaîne des motifs $(CH_3)_2SiO$ et $CH_2=CH(CH_3)SiO$ et à l'extrémité de leur chaîne des motifs choisis parmi ceux de formules $(CH_3)_2CH_2 = CHSiO_{0,5}$,
$HO(CH_3)(CH_2=CH)SiO_{0,5}$,
$(CH_3)_3SiO_{0,5}$,
$C_6H_5(CH_3)CH_2=CHSiO_{0,5}$,
$HO(CH_3)_2SiO_{0,5}$.
et présentent une viscosité d'au moins 2 millions de mPa.s à 25 °C.

3. - Compositions selon la revendication 1 ou 2, caractérisées en ce que les huiles vinylées (2i) ont une viscosité de 30 000 à 170 000 mPa.s à 25 °C et possèdent le long de leur chaîne des motifs $(CH_3)_2SiO$ et $CH_2=CH(CH_3)SiO$ et à l'extrémité de leur chaîne des motifs choisis parmi ceux de formules :
$(CH_3)_3SiO_{0,5}$,
$CH_2=CH(CH_3)_2SiO_{0,5}$,
$CH_3(C_6H_5)(CH_2=CH)SiO_{0,5}$

4. - Compositions selon l'une quelconque des revendications précédentes, caractérisées en ce que le composé aminé est choisi parmi l'ammoniac $NH_3$ et les amines primaires, secondaires et tertiaires de formule générale :
$R''_bN\,H_{3-b}$
dans laquelle les symboles R", identiques ou différents, représentent des radicaux alkyle en $C_1$-$C_{10}$ et le symbole b représente 1, 2 ou 3, l'ensemble des radicaux alkyle liés à l'atome d'azote ayant au plus 14 atomes de carbone, de préférence au plus 12 atomes de carbone.

5. - Compositions selon l'une quelconque des revendications précédentes, caractérisées en ce qu'elles comportent au moins un additif choisi parmi :
(e) - des huiles diorganopolysiloxaniques de formule :
$(R'O)R'''_2SiO(R'''_2SiO)_rSiR'''_2(OR')$
dans laquelle les symboles R‴, identiques ou différents, représentent des radicaux méthyle, phényle, vinyle ; le symbole R' [qui a la signification du symbole R' appartenant à la formule de la gomme (i)] représente un atome d'hydrogène, un radical alkyle en $C_1$-$C_4$ ; le symbole r représente un nombre ayant une valeur appropriée pour obtenir une viscosité d'au plus 5 000 mPa.s à 25 °C ; en outre au moins 40 %, des radicaux représentés par R‴ sont des radicaux méthyle, introduites dans la proportion de 0,1 à 15 parties pour 100 parties du mélange de la gomme (i) et de l'huile vinylée (2i).
(2e) - des composés organosiliciques répondant à la formule générale :
$(F_1)$ $CH_2=C(R^3)COO(CH_2)_wSi(R''')_u(OR^4)_{3-u}$
dans laquelle, le symble R‴ [qui a la signification du symbole R‴ appartenant à la formule de l'huile (e) décrite ci-avant] représente un radical méthyle, vinyle, phényle ; le symbole $R^3$ représente un atome d'hydrogène, le radical méthyle ; le symbole $R^4$ représente un radical méthyle, éthyle, n-propyle, β-méthoxyéthyle ou de formules :
$-CH(CH_3)CH_2OCH_3$ , $-CH_2-CH(CH_3)OCH_3$ ; le symbole w représente un nombre de 1 à 5 et le symbole u représente un nombre de 0 à 2, introduits dans la proportion de 0,01 à 4 parties pour 100 parties du mélange de la gomme (i) et de l'huile vinylée (2i).
(3e) au moins un dérivé organique ou inorganique d'un métal alcalino-terreux choisi parmi le magnésium, le calcium, le baryum et le strontium, introduit dans la proportion de 0,01 à 10 parties pour 100 parties du mélange de la gomme (i) et de l'huile vinylée (2i).

## Patentansprüche

1. Organopolysiloxanzusammensetzungen, die in der Hitze zu Elastomeren härten, dadurch gekennzeichnet, daß sie enthalten:

– 100 Teile eines Gemisches von Organopolysiloxanpolymeren, umfassend:

(i)–70 bis 98 Gew.-% eines Diorganopolysiloxangummis der allgemeinen Formel $R_{3-a}(R'O)_aSiO(R_2SiO)_nSi(OR')_aR_{3-a}$, worin die Symbole R, die identisch oder verschieden sind, $C_1$–$C_8$-Kohlenwasserstoffreste bedeuten, die substituiert oder nicht substituiert sind durch Halogenatome oder Cyanoreste; das Symbol R, bedeutet ein Wasserstoffatom, einen Alkylrest $C_1$–$C_4$: das Symbol a bedeutet Null oder Eins, das Symbol n bedeutet eine Zahl mit einem ausreichenden Wert, daß eine Viskosität von mindestens 1 Million mPa.s bei 25°C erreicht wird, mindestens 50% der Zahl der durch R repräsentierten Reste sind Methylreste und 0,005 bis 0,5 Mol-% Gruppierungen, die in die Konstitution des Gummis eintreten, sind ausgewählt unter denjenigen der Formeln $(CH_2{=}CH)(R)SiO$ und $(CH_2{=}CH)R_{2-a}(RO')_aSi_{0,5}$,

(2i) - 2 bis 30 Gew.-% mindestens eines Diorganopolysiloxanöls der Formel $R_3SiO(R_2SiO)_kSiR_3$, worin die Symbole R, die identisch oder verschieden sind, die unter (i) angegebene Bedeutung haben; das Symbol k bedeutet eine Zahl mit einem ausreichenden Wert, um eine Viskosität von 20 000 bis 200 000 mPa.s bei 25°C zu erreichen, mindestens 50% der Anzahl der R repräsentierten Reste sind Methylreste und 0,05 bis 3 Mol-% der Gruppierungen, die in die Konstitution des Öls eintreten, sind ausgewählt unter solchen der Formeln $(CH_2{=}CH)RSiO$ und $(CH_2{=}CH)R_2SiO_{0,5}$,

– 0,01 bis 10 Teile mindestens einer Aminverbindung mit einem pKa-Wert oberhalb 7,5 in wäßriger Lösung bei 25°C und einem Siedepunkt bei Atmosphärendruck unterhalb 270°C,

– 5 bis 280 Teile mineralische Füllstoffe,

– 0,1 bis 7 Teile eines organischen Peroxids.

2. Zusammensetzungen gemäß Anspruch 1, dadurch gekennzeichnet, daß die Gummis (i) entlang ihrer Kette Gruppierungen $(CH_3)_2SiO$ und $CH_2{=}CH(CH_3)SiO$ und am äußeren Ende ihrer Kette Gruppierungen, ausgewählt unter denjenigen der Formeln $(CH_3)_2CH_2 = CHSiO_{0,5}$, $(CH_3)_3SiO_{0,5}$,

$C_6H_5(CH_3)CH_2{=}CHSiO_{0,5}$,

$HO(CH_3)_2SiO_{0,5}$, besitzen

und eine Viskosität von mindestens 2 Millionen mPa.s bei 25°C aufweisen.

3. Zusammensetzungen gemäß Anspruch 1 oder 2, dadurch gekennzeichnet, daß die vinylierten Öle (2i) eine Viskosität von 30 000 bis 170 000 mPa.s bei 25°C haben und entlang ihrer Kette Gruppierungen $(CH_3)_2SiO$ und $CH_2{=}CH(CH_3)SiO$ und am äußeren Ende ihrer Kette Gruppierungen, ausgewählt unter denjenigen der Formeln:

$(CH_3)_3SiO_{0,5}$,

$CH_2{=}CH(CH_3)_2SiO_{0,5}$

$CH_3(C_6H_5)(CH_2{=}CH)SiO_{0,5}$

besitzen.

4. Zusammensetzungen gemäß einem der vorhergehenden Ansprüche, dadurch gekennzeichnet, daß die Aminverbindung ausgewählt ist unter Ammoniak $NH_3$ und den primären, sekundären und tertiären Aminen der allgemeinen Formel:

$R''_bN\,H_{3-b}$

worin die Symbole R", die identisch oder verschieden sind, $C_1$–$C_{10}$-Alkylreste bedeuten und das Symbol b 1, 2 oder 3 bebedeutet, wobei die Gesamtheit der an das Stickstoffatom gebundenen Alkylreste höchstens 14 Kohlenstoffatome, vorzugsweise höchstens 12 Kohlenstoffatome, hat.

5. Zusammensetzungen gemäß einem der vorhergehenden Ansprüche, dadurch gekennzeichnet, daß sie mindestens einen Zusatz enthalten, ausgewählt unter:

(e) - Diorganopolysiloxanölen der Formel:

$(R'O)R'''_2SiO(R'''_2SiO)_rSiR'''_2(OR')$

worin die Symbole R‴, die identisch oder verschieden sind, Methyl-, Phenyl-, Vinylreste bedeuten; das Symbol R′ [das die Bedeutung des Symbols R', zur Formel des Gummis (i) gehörend, hat] bedeutet ein Wasserstoffatom, einen $C_1$–$C_4$-Alkylrest;

das Symbol r bedeutet eine Zahl mit einem geeigneten Wert, um eine Viskosität von höchstens 5000 mPa.s bei 25°C zu erzielen; im übrigen sind mindestens 40% der durch R‴ repräsentierten Reste Methylreste, die im Verhältnis 0,1 bis 15 Teile pro 100 Teile des Gemisches des Gummis (i) und des vinylierten Öls (2i) eingeführt sind;

(2e)- Organosiliciumverbindungen der allgemeinen Formel:

$(F_1)\ CH_2{=}C(R^3)COO(CH_2)_wSi(R''')_u(OR^4)_{3-u}$

worin das Symbol R‴ [das die Bedeutung des Symbols R‴, das zur Formel des vorstehend beschriebenen Öls (e) gehört, hat] einen Methyl-, Vinyl-, Phenylrest bedeutet; das Symbol $R^3$ ein Wasserstoffatom, den Methylrest bedeutet; das Symbol $R^4$ einen Methyl-, Ethyl-, n-Propyl-, ß-Methoxyethylrest oder die Formeln:

$-CH(CH_3)CH_2OCH_3$, $-CH_2{-}CH(CH_3)OCH_3$ bedeutet, das Symbol w

eine Zahl von 1 bis 5 bedeutet und das Symbol u eine Zahl von 0 bis 2 bedeutet, die im Mengenverhältnis 0,01 bis 4 Teile pro 100 Teile des Gemisches des Gummis (i) und des vinylierten Öls (2i) eingeführt sind;

(3e) – mindestens ein organisches oder anorganisches Derivat eines Erdalkalimetalls, ausgewählt unter Magnesium, Calcium, Barium und Strontium, eingeführt im Verhältnis 0,01 bis 10 Teile pro 100 Teile des Gemisches des Gummis (i) und des vinylierten Öls (2i).

## Claims

1. Organopolysiloxane compositions curing to elastomers when heated, characterized in that they comprise:

– 100 parts of a mixture of organopolysiloxane polymers, containing:

(i) – 70 to 98% by weight of a diorganopolysiloxane resin of general formula $R_{3-a}(R'O)_aSiO(R_2SiO)_nSi(OR')_aR_{3-a}$, in which the symbols R, which are identical or different, denote $C_1$-$C_8$ hydrocarbon radicals substituted otherwise by halogen atoms or cyano radicals, the R'denotes a hydrogen atom or a $C_1$–$C_4$ alkyl radical, the symbol a denotes zero or one, the symbol n denotes a number which has a sufficient value to obtain a viscosity of at least one million mPa. s at 25°C, at least 50% of the number of the radicals denoted by R are methyl radicals and 0.005 to 0.5 mol.-% of the units forming part of the constitution of the resin are chosen from those of formulae $(CH_2{=}CH)$–$(R)SiO$ and $(CH_2{=}CH)R_{2-a}(RO')_aSi_{0,5}$,

(2i) – 2 to 30% by weight of at least one diorganopolysiloxane oil of formula $R_3SiO(R_2SiO)_kSiR_3$ in which the symbols R, which are identical or different, have the meaning given under (i), the symbol k denotes a number which has a sufficient value to obtain a viscosity of 20,000 to 200,000 mPa. s at 25°C, at least 50% of the number of the radicals denoted by R are methyl radicals and 0.05 to 3 mol.-% of the units forming part of the constitution of the oil are chosen from those of formulae $(CH_2{=}CH)RSiO$ and $(CH_2{=}CH)R_2SiO_{0,5}$,

– 0.01 to 10 parts of at least one amino compound which has a pKa higher than 7.5 in aqueous solution at 25°C and a boiling point below 270°C at atmospheric pressure,

– 5 to 280 parts of inorganic fillers,

– 0.1 to 7 parts of an organic peroxide.

2. Compositions according to Claim 1, characterized in that the resins (i) have, along their chain, $(CH_3)_2SiO$ and $CH_2{=}CH(CH_3)SiO$ units and, at the end of the chain, units chosen from those of formulae $(CH_3)_2CH_2{=}CHSiO_{0,5}$,

$(CH_3)_3SiO_{0,5}$,

$HO(CH_3)(CH_2{=}CH)SiO_{0,5}$,

$C_6H_5(CH_3)CH_2{=}CHSiO_{0,5}$,

$HO(CH_3)_2SiO_{0,5}$,

and have a viscosity of at least two million mPa. s at 25°C.

3. Compositions according to Claim 1 or 2, characterized in that the vinylated oils (2i) have a viscosity of 30,000 to 170,000 mPa sat 25°C and have, along their chain, $(CH_3)_2SiO$ and $CH_2{=}CH(CH_3)SiO$ units and, at the end of their chain, units chosen from those of formulae:

$(CH_3)_3SiO_{0,5}$,

$CH_2{=}CH(CH_3)_2SiO_{0,5}$,

$CH_3(C_6H_5)(CH_2{=}CH)SiO_{0,5}$.

4. Compositions according to any one of the preceding claims, characterized in that the amino compound is chosen from ammonia $NH_3$ and primary, secondary and tertiary mines of general formula:

$R''_bNH_{3-b}$

in which the symbols R", which are identical or different, denote $C_1$-$C_{10}$ alkyl radicals and the symbol b denotes 1, 2 or 3, all the alkyl radicals bonded to the nitrogen atom containing at most 14 carbon atoms, preferably at most 12 carbon atoms.

5. Compositions according to any one of the preceding claims, characterized in that they contain at least one additive chosen from:

(e) – diorganopolysiloxane oils of formula:

$(R'O)R'''_2SiO(R'''_2SiO)_rSiR'''_2(OR')$

in which the symbol R‴ which are identical or different, denote methyl, phenyl or vinyl radicals, the symbol R' [which has the meaning of the symbol R' belonging to the formula of the resin (i)] denotes a hydrogen atom or a $C_1$–$C_4$ alkyl radical, and the symbol r denotes a number having a suitable value to obtain a viscosity of not more than 5,000 mPa. s at 25°C; in addition, at least 40% of the radicals denoted by R‴ are methyl radicals introduced in the proportion of 0.1 to 15 parts per 100 parts of the mixture of the resin (i) and of the vinylated oil (2i),

(2e) – organosilicon compounds corresponding to the general formula:

$(F_1)$ $CH_2{=}C(R^3)COO(CH_2)_wSi(R''')_u(OR^4)_{3-u}$

in which the symbol R‴ [which has the meaning of the symbol R‴ belonging to the formula of the oil (e) described above] denotes a methyl, vinyl or phenyl radical, the symbol $R^3$ denotes a hydrogen atom or the methyl radical, the symbol $R^4$ denotes a methyl, ethyl, n-propyl or β-methoxyethylradical or a radical of formulae: $-CH(CH_3)CH_2OH_3$ and $-CH_2-CH(CH_3)OCH_3$, the symbol w denotes a number from 1 to 5 and the symbol u denotes a number from 0 to 2, which are introduced in the proportion of 0.01 to 4 parts per 100 parts of the mixture of the resin (i) and of the vinylated oil (2i),

(3e) at least one organic or inorganic derivative of an alkaline-earth metal chosen from magnesium, calcium, barium and strontium, introduced in the proportion of 0.01 to 10 parts per 100 parts of the mixture of the resin (i) and of the vinylated oil (2i).